# EUROPEAN PATENT APPLICATION

(11) **EP 4 737 280 A1**
(43) Date of publication of application: **06.05.2026**
(21) Application number: 25197641.1
(22) Date of filing: 22.08.2025
(51) Int. Cl.: B62J 17/10, B62J 35/00, B62K 11/04, B62J 25/02, B62M 7/04

(54) **SADDLE-TYPE VEHICLE**

(30) Priority: 29.10.2024 JP 2024189471
(71) Applicant: Suzuki Motor Corporation, Shizuoka 432-8611 (JP)
(72) Inventor: TOKUNAGA, Katsuhiko, Hamamatsu-shi (JP); TANAKA, Hiroshi, Hamamatsu-shi (JP); SATO, Toshihiko, Hamamatsu-shi (JP)
(74) Representative: Haseltine Lake Kempner LLP

(57) **Abstract**

A saddle-type vehicle (1) includes: a fuel tank (40) configured to include a fuel storage space; a cover member (50) configured to cover the fuel tank from outside; and a cushion (74, 75) configured to be installed on a side of the fuel tank. The cover member is formed with knee grip portions (67) that are pinched by knees of a driver. The cushion faces an inner surface of the knee grip portion.

## Description

### TECHNICAL FIELD

The present invention relates to a saddle-type vehicle.

### BACKGROUND ART

A saddle-type vehicle is known in which a fuel tank is covered with a cover member (see, for example, Patent Literature 1). The fuel tank described in Patent Literature 1 has an upper and lower split structure made up of an upper panel and a lower panel, and a flange of the upper panel and a flange of the lower panel are seam-welded. The cover member is attached to a vehicle body so as to hide a flange-shaped joint between the upper panel and the lower panel. The cover member is formed by combining right and left metal side covers and a resin center cover, and the metal side covers increase rigidity against knee grip.

### CITATION LIST

### PATENT LITERATURE

Patent Literature 1: JP2022-184501A

In the saddle-type vehicle described in Patent Literature 1, the fuel tank is covered with the cover member, so a tank width is restricted and a tank capacity tends to be small. Also, there is a problem in that a cover structure becomes complicated in order to increase the rigidity against knee grip.

### SUMMARY

The present invention is made in consideration of the above-described point, and has an object to provide a saddle-type vehicle that can ensure a sufficient tank capacity while also ensuring sufficient rigidity against knee grip with a simple configuration.

A saddle-type vehicle of an aspect of the present invention includes: a fuel tank configured to include a fuel storage space; a cover member configured to cover the fuel tank from outside; and a cushion configured to be installed on a side of the fuel tank, where the cover member is formed with knee grip portions that are pinched by knees of a driver, and the cushion faces an inner surface of the knee grip portion.

According to the saddle-type vehicle of the aspect of the present invention, the fuel tank is prevented from coming into direct contact with the cover member by the cushion on the side of the fuel tank. As a result, the side of the fuel tank is brought closer to an inner surface of the cover member, a tank capacity of the fuel tank is ensured, and a width dimension of the knee grip portion can be reduced. Furthermore, even when the cover member is deformed inward due to a knee grip force, the cover member is supported from the inside by the fuel tank via the cushion. In this manner, deformation of the cover member can be suppressed with a simple configuration.

### BRIEF DESCRIPTION OF DRAWINGS

FIG. 1 is a left side view of a saddle-type vehicle according to an example.
FIG. 2 is a left side view of a periphery of a cover member according to the example.
FIG. 3 is a top view of the periphery of the cover member according to the example.
FIG. 4 is a left side view of a periphery of a fuel tank according to the example.
FIG. 5 is a top view of the periphery of the fuel tank according to the example.
FIG. 6 is a rear view of the cover member according to the example.
FIG. 7 is a cross-sectional view illustrating a latched state of the cover member according to the example.
FIG. 8 is a perspective view illustrating a latched state of the cover member according to the example.
FIG. 9 is a side view illustrating a knee grip state according to the example.
FIG. 10 is a cross-sectional view of a front portion of a vehicle body of FIG. 9 taken along a line A-A.

### DESCRIPTION OF EMBODIMENTS

In a saddle-type vehicle according to an aspect of the present invention, a fuel storage space is formed in a fuel tank, and the fuel tank is covered from the outside by a cover member. A cushion is installed on a side of the fuel tank, and the cover member is formed with knee grip portions that are pinched by knees of a driver. The cushion faces an inner surface of the knee grip portion, and the cushion on the side of the fuel tank prevents the fuel tank from coming into direct contact with the cover member. As a result, the side of the fuel tank is brought closer to an inner surface of the cover member, a tank capacity of the fuel tank is ensured, and a width dimension of the knee grip portion can be reduced. Furthermore, even when the cover member is deformed inward due to a knee grip force, the cover member is supported from the inside by the fuel tank via the cushion. In this manner, deformation of the cover member can be suppressed with a simple configuration.

### Example

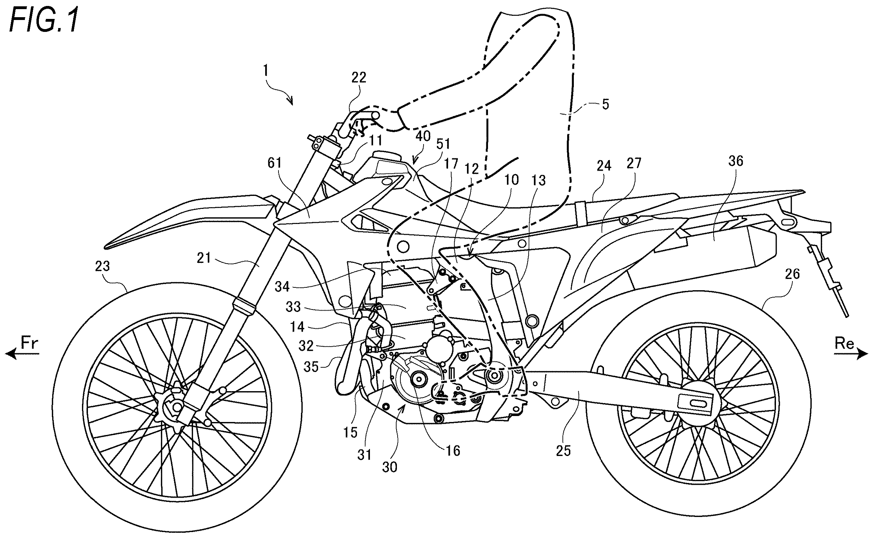

Hereinafter, a saddle-type vehicle according to this example will be described with reference to the accompanying drawings. FIG. 1 is a left side view of the saddle-type vehicle according to the example. In the following drawings, an arrow Fr indicates the front of the vehicle, an arrow Re indicates the rear of the vehicle, an arrow L indicates the left side of the vehicle, and an arrow R indicates the right side of the vehicle. In FIG. 1, a driver is indicated by a two-dot chain line.

As illustrated in FIG. 1, a saddle-type vehicle 1 is configured by mounting an engine 30, an electrical system, and various other components on a vehicle body frame 10. A pair of tank rails 12 extend diagonally downward and rearward from a head pipe 11 of the vehicle body frame 10 on the right and left sides, and a pair of body frames 13 extend downward from rear portions of the pair of tank rails 12. A down frame 14 extends downward from the head pipe 11, and an underloop 15 bent rearward is connected to a lower portion of the down frame 14. A rear end of the underloop 15 is connected to a lower portion of the pair of body frames 13, so that the vehicle body frame 10 is formed into a cradle shape.

A front fork 21 is supported on the head pipe 11 via a steering shaft (not illustrated) so as to be steerable. A handlebar 22 is provided on an upper portion of the front fork 21, and a front wheel 23 is rotatably supported on a lower portion of the front fork 21. A fuel tank 40 is placed on an upper portion of the pair of tank rails 12, and the pair of tank rails 12 and the fuel tank 40 are covered by a tank cover 51 and a pair of front side covers (side covers) 61. A seat 24 is installed behind the fuel tank 40, and a seat frame (not illustrated) that supports the seat 24 from below is covered from sides by a pair of rear side covers 27.

A swing arm 25 is supported by the body frame 13 so as to be able to swing. The swing arm 25 extends rearward from the body frame 13, and a rear wheel 26 is rotatably supported at a rear end of the swing arm 25. The engine 30 is suspended inside the vehicle body frame 10 via a plurality of suspension brackets (not illustrated). A cylinder assembly, which is made up of a cylinder 32, a cylinder head 33, and a cylinder head cover 34 stacked together, is attached to an upper surface of a crankcase 31 of the engine 30. An exhaust pipe 35 extends downward from a front left side of the cylinder head 33, passes through a right side of the cylinder 32, and is connected to a muffler 36 at the rear of the vehicle.

Meanwhile, a typical off-road vehicle employs a semi-cradle type vehicle body frame, and a fuel tank is mounted so as to straddle a single tank rail. A cross section of the fuel tank is horseshoe shaped, with a bottom surface of the fuel tank being narrow. However, since a broad side surface of the fuel tank is used as a knee grip portion, a cover member for covering the fuel tank is not necessary. Carburetor specifications can be easily used with fuel tanks that have a narrow bottom surface, but Fuel Injection (FI) specifications require an in-tank pump at the bottom surface of the fuel tank, making it difficult to use with horseshoe-shaped fuel tanks that have a narrow bottom surface.

FI-spec off-road vehicles often use a double-cradle type vehicle body frame, with an upper and lower split fuel tank mounted on the vehicle body frame. The upper and lower split fuel tank is formed by seam welding flanges of upper and lower panels. This requires a cover member to cover the flange of the fuel tank, which restricts a tank width and tends to reduce a tank capacity, making it difficult to ensure rigidity against knee grip forces. In this example, therefore, a cushion is provided on a side of the fuel tank to narrow a gap between the fuel tank and the cover member, and the knee grip force is received by the fuel tank via the cushion.

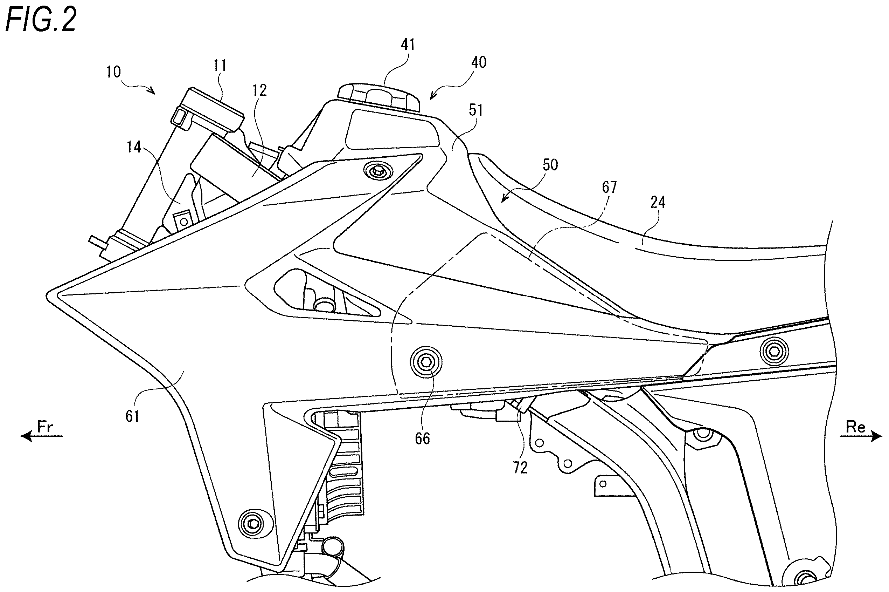

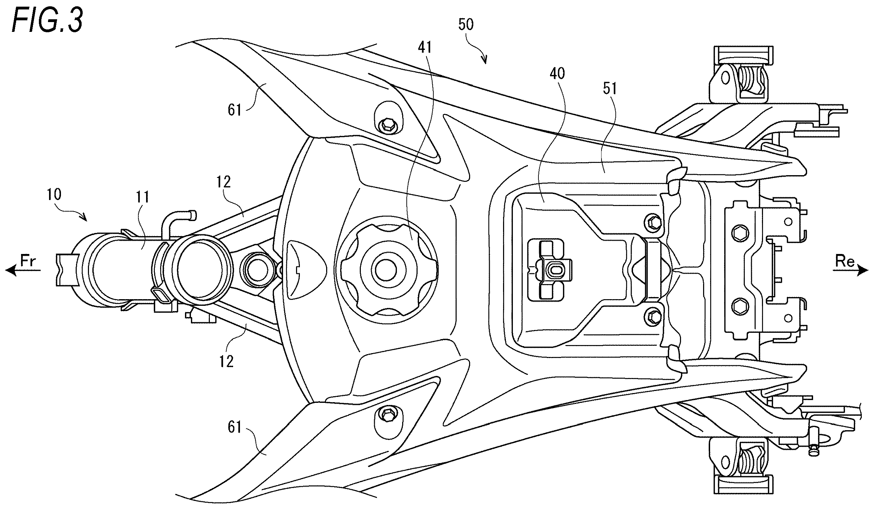

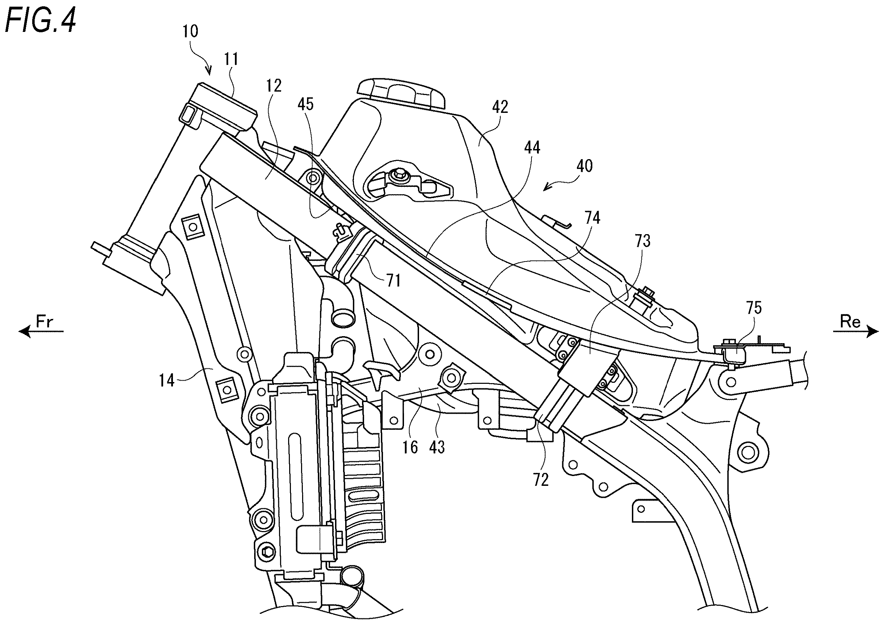

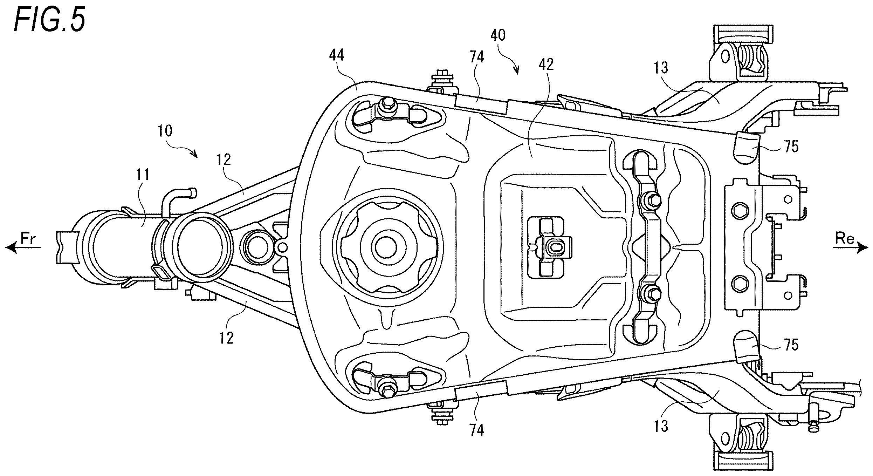

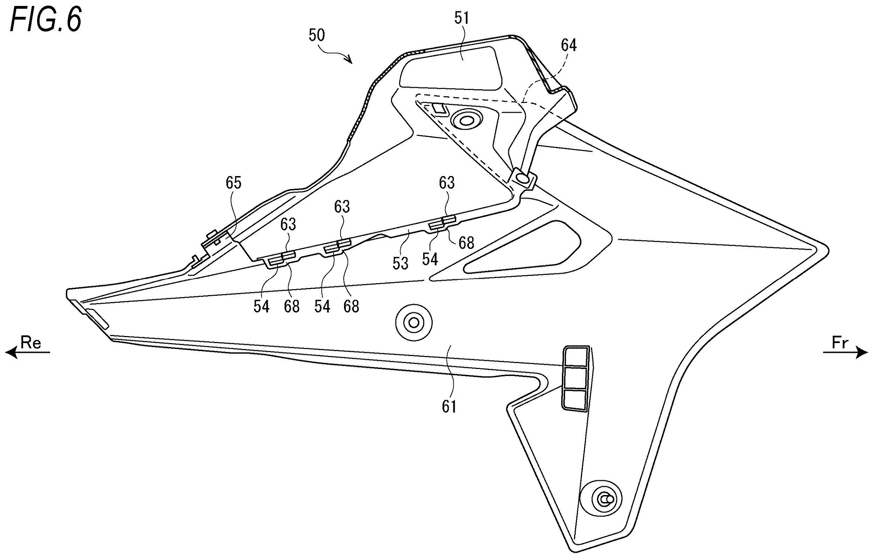

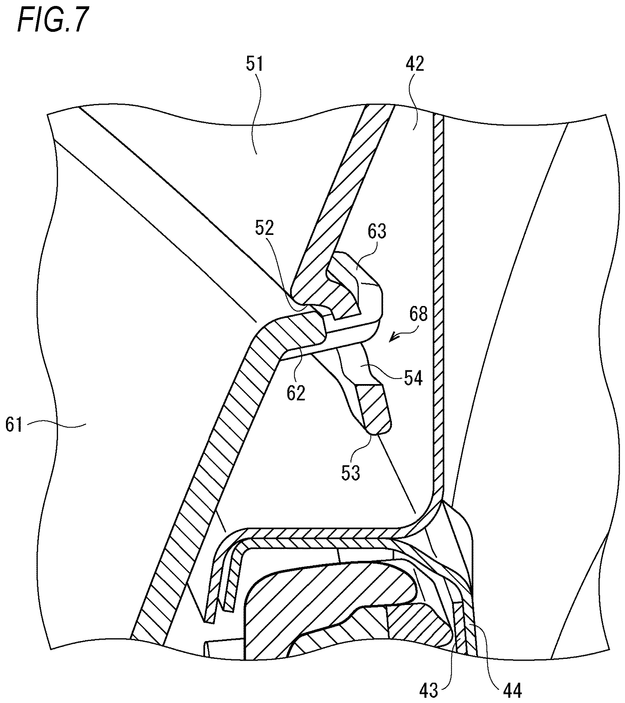

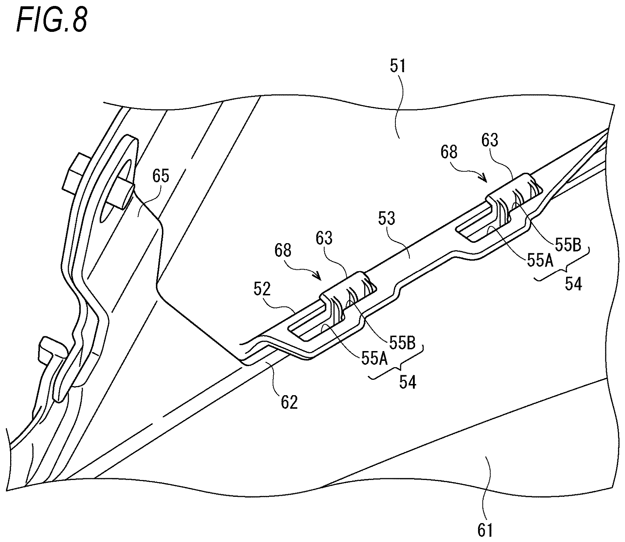

A fixing structure of the cover member will be described with reference to FIGS. 2 to 8. FIG. 2 is a left side view of a periphery of the cover member of this example. FIG. 3 is a top view of the periphery of the cover member of this example. FIG. 4 is a left side view of a periphery of a fuel tank of this example. FIG. 5 is a top view of the periphery of the fuel tank of this example. FIG. 6 is a rear view of the cover member of this example. FIG. 7 is a cross-sectional view illustrating a latched state of the cover member of this example. FIG. 8 is a perspective view illustrating a latched state of the cover member of this example. FIG. 4 illustrates a state in which the tank cover, the pair of front side covers, and the seat of FIG. 2 are removed, and FIG. 5 illustrates a state in which the tank cover, the pair of front side covers, and the seat of FIG. 3 are removed.

As illustrated in FIGS. 2 and 3, at an upper portion of the vehicle body frame 10, the pair of tank rails 12 extend diagonally downward and rearward from an upper rear side of the head pipe 11, and the single down frame 14 extends downward from a lower rear side of the head pipe 11. Intermediate portions of the pair of tank rails 12 and an intermediate portion of the down frame 14 are connected via a pair of bridges 16 (see FIG. 4) for reinforcement. The fuel tank 40 is supported on the pair of tank rails 12, and a cover member 50 is provided to cover the fuel tank 40 and the pair of tank rails 12 from the outside. The cover member 50 is formed with knee grip portions 67 that are held between knees of a driver 5.

The cover member 50 is formed of the tank cover 51 that covers the fuel tank 40 from above, and the pair of front side covers 61 that cover the fuel tank 40 from both sides. The tank cover 51 mainly covers a peripheral portion of a tank cap 41 and upper sides of the fuel tank 40, and the pair of front side covers 61 mainly covers the frame portion forward of the fuel tank 40 and lower sides of the fuel tank 40. The tank cover 51 and the pair of front side covers 61 are both made of resin, which increases the degree of freedom in their shape. The cover member 50 is composed of the tank cover 51 and the pair of front side covers 61, thereby improving the appearance of the vehicle.

The knee grip portions 67 are formed across the tank cover 51 and the pair of front side covers 61. The knee grip portions 67 indicate specified areas with which the knees of the driver 5 naturally come into contact when riding the saddle-type vehicle 1, and are provided in a range from a middle position of the fuel tank 40 in a front-rear direction to a rear end position. The pair of front side covers 61 are fixed to the pair of bridges 16 by fixing portions 66 of the knee grip portions 67. Since the pair of front side covers 61 are supported from the inside by the vehicle body frame 10, deformation is suppressed even when a strong knee grip force is applied to the pair of front side covers 61 and the tank cover 51.

As illustrated in FIGS. 4 and 5, the fuel tank 40 is a two-piece tank in which an upper panel 42 and a lower panel 43 are joined together. The upper panel 42 bulges upward in a dome shape, and the lower panel 43 bulges downward in a dome shape, with the upper panel 42 and the lower panel 43 forming a fuel storage space. An outer edge of the upper panel 42 and an outer edge of the lower panel 43 are seam-welded, and a flange 44 is formed at the joint between the upper panel 42 and the lower panel 43. In a side view, the flange 44 of the fuel tank 40 is curved in a downwardly bulging arc shape, and the flange 44 is hidden by the tank cover 51 and the pair of front side covers 61.

Below the front half of the flange 44, a support surface 45 having a flat shape is formed on the fuel tank 40 along the pair of tank rails 12. The rear half of the flange 44 is warped rearward so as to move away from the pair of tank rails 12. A pair of front rail cushions 71 are attached to front sides of the pair of tank rails 12, and a pair of rear rail cushions 72 are attached to rear sides of the pair of tank rails 12. The support surface 45 on the front side of the fuel tank 40 is supported from below by the pair of front rail cushions 71, and the rear half of the flange 44 of the fuel tank 40 is supported from below by the pair of rear rail cushions 72 via a pair of relay members 73.

A pair of front tank cushions (front cushions) 74 and a pair of rear tank cushions (rear cushions) 75 are attached to the flange 44 of the fuel tank 40. The pair of front tank cushions 74 are attached to the flange 44 at intermediate positions in the front-rear direction, and the pair of rear tank cushions 75 are attached to the flange 44 at rear end positions. The pair of front tank cushions 74 and the pair of rear tank cushions 75 are folded back so as to cover side edges of the flange 44. The front tank cushion 74 faces a front side of an inner surface of the knee grip portion 67, and the rear tank cushion 75 faces a rear side of the inner surface of the knee grip portion 67.

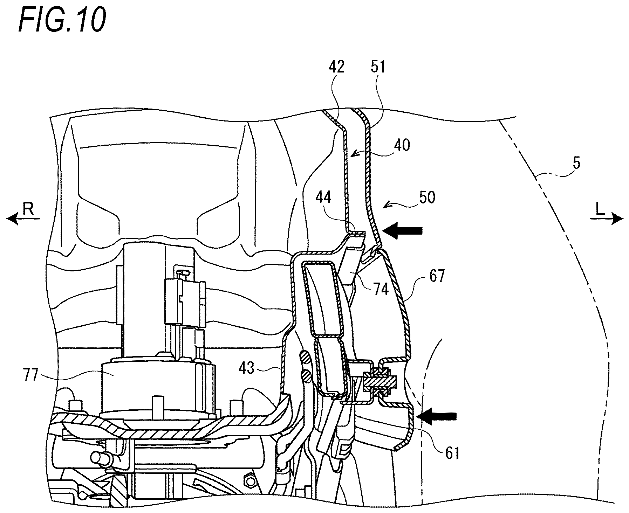

The flange 44 is brought close to the tank cover 51 and the pair of front side covers 61 without coming into direct contact with the inner surfaces of the tank cover 51 and the pair of front side covers 61. This ensures a tank capacity of the fuel tank 40 and reduces a knee grip width. Furthermore, contact between the tank cover 51 and the pair of front side covers 61 and the front tank cushion 74 and rear tank cushion 75 is kept to a minimum, thereby suppressing transmission of engine vibration. In addition, the knee grip force is distributed and received by the front tank cushion 74 and the rear tank cushion 75, thereby suppressing deformation of the cover member 50. A pump 77 of an in-tank type is provided at the bottom of the fuel tank 40 (see FIG. 10).

As illustrated in FIGS. 6 to 8, at seams between the tank cover 51 and the pair of front side covers 61, a step 52 is provided on the tank cover 51 and overlapping edges 62 are provided on the pair of front side covers 61. The step 52 is formed so that a lower edge 53 of the tank cover 51 fits inside the pair of front side covers 61, and the overlapping edges 62 of the pair of front side covers 61 are formed to overlap the step 52. Surfaces of the tank cover 51 and the pair of front side covers 61 are smoothly joined, so that both legs of the driver 5 are less likely to get caught in the seams between the tank cover 51 and the pair of front side covers 61.

A plurality of latched points 68 are provided along the seams between the tank cover 51 and the pair of front side covers 61. At the plurality of latched points 68, a plurality of hook holes 54 are formed in the lower edge 53 of the tank cover 51, and a plurality of hooks 63 are formed in the overlapping edges 62 of the pair of front side covers 61. The plurality of hook holes 54 are formed by connecting elongated holes 55A having a wide width and elongated holes 55B having a narrow width in an extending direction of the seam. The elongated hole 55A having a wide width is formed to have a width that allows the hook 63 to enter, and the elongated hole 55B having a narrow width is formed to have a width that allows the hook 63 to be prevented from slipping out. The plurality of hooks 63 are bent so that their tips face upward.

In this case, the plurality of hooks 63 of the pair of front side covers 61 are inserted into the elongated holes 55A of the plurality of hook holes 54 of the tank cover 51. Along the seams between the tank cover 51 and the pair of front side covers 61, the plurality of hooks 63 are slid into the elongated holes 55B of the plurality of hook holes 54 and hooked thereto. The tank cover 51 and the pair of front side covers 61 are latched at a plurality of points, thereby suppressing deformation of the seams between the tank cover 51 and the pair of front side covers 61. An input direction of the knee grip force differs from a sliding direction of the hook 63, so that the tank cover 51 and the pair of front side covers 61 are less likely to come off.

As illustrated in FIG. 6, first extension portions 64 extend from front sides of the pair of front side covers 61 so as to overlap the tank cover 51, and second extension portions 65 (see FIG. 8) extend from rear sides of the pair of front side covers 61 so as to overlap the tank cover 51. The first extension portion 64 overlaps the tank cover 51 from the outside, and the second extension portion 65 overlaps the tank cover 51 from the inside. The first and second extension portions 64, 65 and the tank cover 51 are fastened together with bolts, and the pair of front side covers 61 are fixed to outer and inner sides of the tank cover 51, strongly preventing the tank cover 51 and the pair of front side covers 61 from loosening.

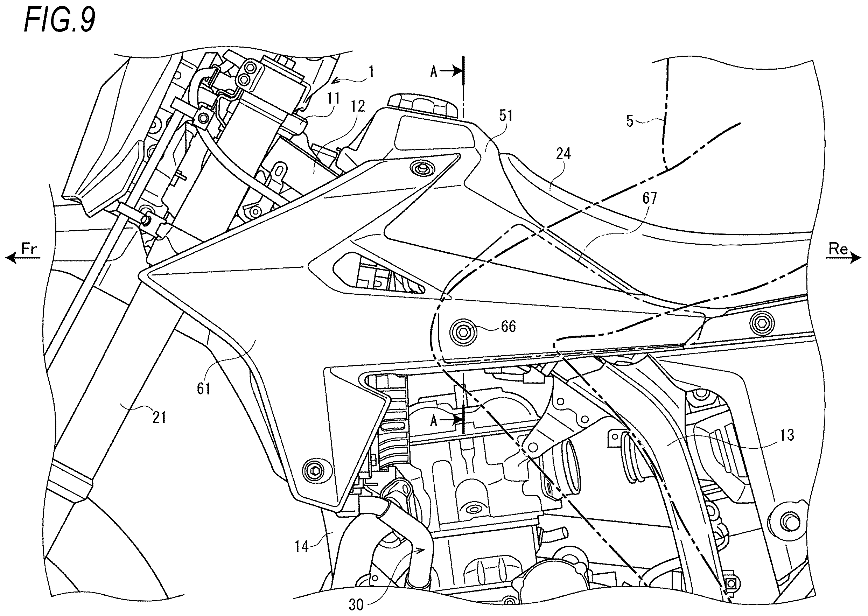

A positional relationship between the driver's knees and the cover member when knee gripping will be described with reference to FIGS. 9 and 10. FIG. 9 is a side view illustrating a knee grip state according to this example. FIG. 10 is a cross-sectional view of a front portion of a vehicle body of FIG. 9 taken along a line A-A.

As illustrated in FIGS. 9 and 10, when the driver 5 is in a riding position straddling the seat 24 of the saddle-type vehicle 1, the knees of the driver 5 overlap the tank cover 51 and the knee grip portions 67 in the rear half portions of the pair of front side covers 61. The knee grip portion 67 is pinched by the knees and thighs of the driver 5, and a strong knee grip force acts on the knee grip portion 67 inwardly in a vehicle width direction. The fixing portions 66 for fixing the pair of front side covers 61 to the bridges 16 (see FIG. 4) are provided near the knees of the driver 5, and the knee grip force is received by the bridge 16, suppressing deformation of the pair of front side covers 61.

The seams between the tank cover 51 and the pair of front side covers 61 are latched together, so that the tank cover 51 and the pair of front side covers 61 will not separate even when knee grip forces are applied. The flange 44 of the fuel tank 40 is located inside the tank cover 51 and the pair of front side covers 61, and the front tank cushion 74 and the rear tank cushion 75 (see FIG. 5) are attached to the flange 44. Even when the tank cover 51 and the pair of front side covers 61 are deformed inward, they are received by the front tank cushions 74 and the rear tank cushions 75 and do not come into contact with the flange 44.

In addition, the flange 44 of the fuel tank 40 extends outward in the vehicle width direction, and has high rigidity against the knee grip force acting inward in the vehicle width direction. The knee grip force is received by the flange 44 via the front tank cushion 74 and the rear tank cushion 75, thereby suppressing deformation of the tank cover 51 and the pair of front side covers 61. Even when the flange 44 is brought close to inner surfaces of the tank cover 51 and the pair of front side covers 61, the tank cover 51 and the pair of front side covers 61 are not damaged by the flange 44. A width dimension of the fuel tank 40 is increased to ensure a sufficient tank capacity.

As described above, in the saddle-type vehicle 1 of this example, the front tank cushion 74 and the rear tank cushion 75 prevent the fuel tank 40 from coming into direct contact with the tank cover 51 and the pair of front side covers 61. Therefore, the tank capacity of the fuel tank 40 is ensured and the width dimension of the knee grip portion 67 can be reduced. In addition, when receiving the knee grip forces, the tank cover 51 and the pair of front side covers 61 are supported from inside by the fuel tank 40 via the front tank cushion 74 and the rear tank cushion 75, thereby suppressing deformation.

In this example, the cushion is attached to the flange of the fuel tank, but the cushion only needs to face the inner surface of the knee grip portion, and the cushion only needs to be installed on the side of the fuel tank.

In addition, in this example, the front tank cushion and the rear tank cushion are attached to the flange of the fuel tank, but it is sufficient that at least one cushion is attached to the side surface of the fuel tank.

Furthermore, in this example, the fuel tank is formed by joining the upper panel and the lower panel, but the fuel tank may be any tank that has a fuel storage space. The fuel tank does not have to be formed with a flange.

In addition, in this example, the cover member is formed by the tank cover and the pair of front side covers, but the cover member may be formed by a single cover, or may be composed of four or more covers.

In addition, in this example, the step is provided on the tank cover and the overlapping edges are provided on the pair of front side covers, but an overlapping edge may be provided on the tank cover and steps may be provided on the pair of front side covers.

In addition, in this example, the hooks of the pair of front side covers are latched to the hook holes of the tank cover, but the structure for latching the pair of front side covers to the tank cover is not particularly limited.

In addition, in this example, the first and second extension portions extend from each of the pair of front side covers, but a single extension portion may extend from each of the pair of front side covers, or three or more extension portions may extend from each of the pair of front side covers.

Further, in this example, the pair of front side covers are fixed to the bridges at the knee grip portions, but the pair of front side covers may be fixed to the vehicle body frame at locations other than the knee grip portions.

Furthermore, the mounting structure of the cover member and the support structure using the cushion in this example are not limited to the above-described off-road type saddle-type vehicle, and may be adopted in other types of saddle-type vehicles. A saddle-type vehicle is not limited to all vehicles in which a driver sits astride a seat, but also includes scooter-type vehicles in which a driver does not sit astride a seat.

As described above, a saddle-type vehicle of a first aspect includes a fuel tank (40) that has a fuel storage space, a cover member (50) that covers the fuel tank from outside, and a cushion (74, 75) that is installed on a side of the fuel tank, where the cover member is formed with knee grip portions (67) that are pinched by knees of a driver, and the cushion faces an inner surface of the knee grip portion. According to this configuration, the fuel tank is prevented from coming into direct contact with the cover member by the cushion on the side of the fuel tank. As a result, the side of the fuel tank is brought closer to an inner surface of the cover member, a tank capacity of the fuel tank is ensured, and a width dimension of the knee grip portion can be reduced. Furthermore, even when the cover member is deformed inward due to a knee grip force, the cover member is supported from the inside by the fuel tank via the cushion. In this manner, deformation of the cover member can be suppressed with a simple configuration.

In a second aspect, in the first aspect, the fuel tank is formed by joining an upper panel (42) and a lower panel (43), and the cushion is attached to a flange (44) that is a joint between the upper panel and the lower panel. According to this configuration, by attaching the cushion to the flange, the flange does not come into direct contact with the cover member. As a result, the flange is brought closer to the cover member, the tank capacity of the fuel tank is ensured, and the knee grip width can be reduced. Furthermore, contact between the cover member and the cushion is kept to a minimum, thereby suppressing transmission of engine vibration.

In a third aspect, in the first and second aspects, the cushion includes a front cushion (front tank cushion 74) and a rear cushion (rear tank cushion 75) spaced apart from each other in a front-rear direction, and the front cushion faces a front side of an inner surface of the knee grip portion, and the rear cushion faces a rear side of the inner surface of the knee grip portion. According to this configuration, the knee grip force is distributed and received by the front cushion and the rear cushion, thereby suppressing deformation of the cover member.

In a fourth aspect, in any one of the first to third aspects, the cover member is formed of a tank cover (51) that covers the fuel tank from above and a pair of side covers (front side covers 61) that cover the fuel tank from both sides, and the knee grip portion is formed across the tank cover and the side cover. According to this configuration, the cover member is composed of the tank cover and the pair of side covers, thereby improving the appearance of the vehicle.

In a fifth aspect, in the fourth aspect, at seams between the tank cover and the pair of side covers, a step (52) is provided in one of the tank cover and the pair of side covers, and an overlapping edge (62) that overlaps the step is provided in the other of the tank cover and the pair of side covers. According to this configuration, surfaces of the tank cover and the pair of side covers are smoothly joined, so that both legs of the driver are less likely to get caught in the seams between the tank cover and the pair of side covers.

In a sixth aspect, in the fifth aspect, a hook hole (54) is formed in the step and a hook (63) is formed on the overlapping edge, and the hook is slid and latched to the hook hole along the seams between the tank cover and the pair of side covers. According to this configuration, an input direction of the knee grip force differs from a sliding direction of the hook, so that the tank cover and the pair of side covers are less likely to come off.

In a seventh aspect, in any one of the fourth to sixth aspects, a plurality of latched points (68) are provided along seams between the tank cover and the pair of side covers. According to this configuration, the tank cover and the pair of side covers are latched at a plurality of points, thereby suppressing deformation of the seams between the tank cover and the pair of side covers.

In an eighth aspect, in any one of the fourth to seventh aspects, a plurality of extension portions (64, 65) extend from the pair of side covers so as to overlap the tank cover, and the plurality of extension portions and the tank cover are fastened together. This configuration prevents the tank cover and the pair of side covers from becoming loose.

In a ninth aspect, in the eighth aspect, the plurality of extension portions are a first extension portion (64) overlapping the tank cover from an outer side and a second extension portion (65) overlapping the tank cover from an inner side. According to this configuration, the pair of side covers are fixed to outer and inner sides of the tank cover, preventing the tank cover and the pair of side covers from becoming loose.

In a tenth aspect, in any one of the fourth to ninth aspects, the pair of side covers are fixed to a vehicle body frame (10) at the knee grip portions. According to this configuration, the pair of side covers are supported from the inside by the vehicle body frame, so that deformation is suppressed even when a strong knee grip force is applied to the pair of side covers and the tank cover.

Although the present example is described, other examples may be made by combining the above-described example and modification examples in whole or in part.

Furthermore, the technology of the present invention is not limited to the above-described examples, and may be modified, substituted, or changed in various ways without departing from the spirit and scope of the technical concept. Furthermore, when technological advances or derived technologies allow the technical ideas to be realized in a different way, they may be implemented using that method. Therefore, the claims cover all embodiments that may fall within the scope of the technical concept.

### REFERENCE SIGNS LIST

1: saddle-type vehicle
5: driver
10: vehicle body frame
40: fuel tank
42: upper panel
43: lower panel
44: flange
50: cover member
51: tank cover
52: step
54: hook hole
61: front side cover (side cover)
62: overlapping edge
63: hook
64: first extension portion
65: second extension portion
66: fixing portion
67: knee grip portion
68: latched point
74: front tank cushion (front cushion)
75: rear tank cushion (rear cushion)

## Claims

1. A saddle-type vehicle (1), comprising:
a fuel tank (40) configured to include a fuel storage space;
a cover member (50) configured to cover the fuel tank from outside; and
a cushion (74, 75) configured to be installed on a side of the fuel tank, wherein
the cover member is formed with knee grip portions (67) that are pinched by knees of a driver, and
the cushion faces an inner surface of the knee grip portion.

2. The saddle-type vehicle according to claim 1, wherein
the fuel tank is formed by joining an upper panel and a lower panel, and
the cushion is attached to a flange that is a joint between the upper panel and the lower panel.

3. The saddle-type vehicle according to claim 1, wherein
the cushion includes a front cushion and a rear cushion spaced apart from each other in a front-rear direction, and
the front cushion faces a front side of the inner surface of the knee grip portion, and the rear cushion faces a rear side of the inner surface of the knee grip portion.

4. The saddle-type vehicle according to claim 1 or 2, wherein
the cover member is formed of a tank cover that covers the fuel tank from above and a pair of side covers that cover the fuel tank from both sides, and
the knee grip portion is formed across the tank cover and the side cover.

5. The saddle-type vehicle according to claim 4, wherein at seams between the tank cover and the pair of side covers, a step is provided in one of the tank cover and the pair of side covers, and an overlapping edge that overlaps the step is provided in the other of the tank cover and the pair of side covers.

6. The saddle-type vehicle according to claim 5, wherein
a hook hole is formed in the step and a hook is formed on the overlapping edge, and
the hook is slid and latched to the hook hole along the seams between the tank cover and the pair of side covers.

7. The saddle-type vehicle according to claim 4, wherein a plurality of latched points are provided along seams between the tank cover and the pair of side covers.

8. The saddle-type vehicle according to claim 4, wherein
a plurality of extension portions extend from the pair of side covers so as to overlap the tank cover, and
the plurality of extension portions and the tank cover are fastened together.

9. The saddle-type vehicle according to claim 8, wherein the plurality of extension portions are a first extension portion overlapping the tank cover from an outer side and a second extension portion overlapping the tank cover from an inner side.

10. The saddle-type vehicle according to claim 4, wherein the pair of side covers are fixed to a vehicle body frame at the knee grip portions.
